# EUROPÄISCHE PATENTSCHRIFT

(11) **EP 0 811 209 B1**
(45) Veröffentlichungstag und Bekanntmachung des Hinweises auf die Patenterteilung: **17.04.2002**
(21) Anmeldenummer: 96944044.5
(22) Anmeldetag: 20.12.1996
(51) Int. Cl.: G07D 7/00

(54) **VERFAHREN UND VORRICHTUNG ZUR DETEKTION EINES ELEKTRISCH LEITFÄHIGEN ELEMENTS IN EINEM DOKUMENT**
METHOD AND APPARATUS FOR DETECTING AN ELECTROCONDUCTIVE ELEMENT IN A DOCUMENT
PROCEDE ET DISPOSITIF DE DETECTION D'UN ELEMENT ELECTROCONDUCTEUR DANS UN DOCUMENT

(30) Priorität: 22.12.1995 DE 19548532
(43) Veröffentlichungstag der Anmeldung: 10.12.1997
(73) Patentinhaber: Giesecke & Devrient GmbH, 81677 München (DE)
(72) Erfinder: GERZ, Christoph, Dr., D-83624 Otterfing (DE)
(74) Vertreter: Klunker . Schmitt-Nilson . Hirsch
(86) Internationale Anmeldenummer: EP9605767
(87) Internationale Veröffentlichungsnummer: WO9723848

(56) Entgegenhaltungen:
- DE-A- 4 339 417
- DE-A- 4 405 860
- US-A- 4 255 652
- US-A- 5 417 316
- US-A- 5 419 424

## Beschreibung

Die Erfindung betrifft ein Verfahren zur Detektion eines elektrisch leitfähigen Elements in einem Dokument gemäß dem Oberbegriff des Anspruchs 1.

Ein Verfahren der obengenannten Art ist z. B. aus der DE 43 39 417 A1 bekannt. Bei dem bekannten Verfahren wird das von einem Oszillator erzeugte hochfrequente Signal an eine Sendelektrode angelegt. Das gesendete Signal wird über den elektrisch leitfähigen Sicherheitsfaden auf die Empfangselektrode übertragen und in einer Auswerteschaltung bewertet. Der Sicherheitsfaden wird von der Auswerteschaltung als echt erkannt, wenn Amplitude und Phasenlage des übertragenen Signals mit dem Eingangssignal am Sender übereinstimmen.

Ein Problem bei der Detektierung von Sicherheitsfäden in einem Dokument besteht darin, daß beispielsweise ein feuchtes Dokument aufgrund der elektrolytischen Leitung ein Signal bewirken kann, obwohl das Dokument keinen Sicherheitsfaden aufweist. Eine sichere Unterscheidung des aufgrund der metallischen Leitung des Sicherheitsfadens von der Sende- zur Empfangselektrode übertragenen Signals von einem durch die elektrolytische Leitung im Dokument bewirkten Signal ist jedoch durch die zwischen Sende- und Empfangselektrode vorhandenen hohen kapazitiven Koppelwiderstände erschwert. Diese können beispielsweise bei einer Arbeitsfrequenz im 100-kHz-Bereich in der Größenordnung von Mega-Ohm liegen und sind somit sehr viel größer als der Widerstand des metallischen Sicherheitsfadens, der z. B. im Kilo-Ohm-Bereich liegen kann. Bedingt durch die hohen kapazitiven Koppelwiderstände läßt sich jedoch der Beitrag des Sicherheitsfadens bei der Messung nicht mehr genau erfassen. Dies ist aber wichtig, um eine sichere Erkennung des Sicherheitsfadens im Dokument zu gewährleisten.

Der Erfindung liegt somit die Aufgabe zugrunde, ein einfaches und sichereres Verfahren zur Detektierung eines elektrisch leitfähigen Elementes in einem Dokument vorzuschlagen.

Diese Aufgabe wird erfindungsgemäß durch die in dem kennzeichnenden Teil der nebengeordneten Ansprüche angegebenen Merkmale gelöst.

Der Grundgedanke der Erfindung besteht darin, daß zur Detektierung eines elektrisch leitfähigen Elementes in einem Dokument ein moduliertes Trägerfrequenzsignal an wenigstens eine Sendeelektrode angekoppelt wird, das mittels des elektrisch leitfähigen Elements zu wenigstens einer Empfangselektrode übertragen und das empfangene Modulationssignal zur Erkennung des elektrisch leitfähigen Elements ausgewertet wird. Das elektrisch leitfähige Element wirkt hierbei als kapazitives Koppelelement zwischen der Sende- und Empfangselektrode.

Vorzugsweise wird das kapazitiv übertragene modulierte Trägerfrequenzsignal empfängerseitig auf die Modulationsfrequenz abgemischt. Das Signal mit der Modulationsfrequenz kann dann zur Erkennung des elektrisch leitfähigen Elements nach der Amplitude ausgewertet werden. Das Signal kann dabei vor der Auswertung noch gefiltert und verstärkt werden. Aufgrund der Bauteile-Verfügbarkeit und der Kosten wird vorzugsweise ein z. B. in der Rundfunktechnik üblicher Wert von 455 kHz als Modulationsfrequenz gewählt. Zur Modulation des Trägerfrequenzsignals kann eine Amplitudenmodulation verwendet werden, wobei die Trägerfrequenz im MHz-Bereich und die Modulationsfrequenz im kHz-Bereich liegen kann.

Durch die Verwendung einer im Vergleich zur Modulationsfrequenz sehr hohen Trägerfrequenz können die kapazitiven Koppelwiderstände zwischen Sende- und Empfangselektrode deutlich, z. B. um einen Faktor von 10³ reduziert werden, was eine genauere Detektierung der elektrisch leitfähigen Elemente ermöglicht. Aufgrund der geringen kapazitiven Koppelwiderstände, die z.B. im Kilo-Ohm-Bereich liegen, ist das erfindungsgemäße Verfahren umempfindlich gegen Feuchtigkeit in den Dokumenten.

Da das Abmischen der modulierten Trägerfrequenz mit derselben Trägerfrequenz erfolgt, wird nur ein UHF-Oszillator für Sende- und Empfangselektrode benötigt. Es kann z. B. ein einfacher LC-Oszillator verwendet werden. Dadurch kann das Verfahren mit geringem technischen Aufwand durchgeführt werden.

In einer Weiterbildung können auch mehrere Sende- und Empfangselektroden zur Detektierung des elektrisch leitfähigen Elements im Dokument vorgesehen werden. Die Sende- als auch die Empfangselektrode eines Elektrodenpaars sind jeweils zueinander linienförmig angeordnet. Jedes Elektrodenpaar entspricht hierbei einer Meßspur. Die Elektrodenpaare sind so angeordnet, daß die Meßspuren sich nicht gegenseitig stören. Die Verwendung mehrerer Meßspuren hat den Vorteil, daß auch bei Schräglauf der zu prüfenden Dokumente das elektrisch leitfähige Element zuverlässig erfaßt werden kann. Durch die erhöhte Zahl von Meßspuren sinkt auch die Wahrscheinlichkeit, daß bei Sicherheitsfäden, die Risse aufweisen, diese genau dort liegen, wo sie die Dektektierung beeinträchtigen. Dadurch kann auch die Empfindlichkeit auf Risse im Sicherheitsfaden bei der Messung reduziert werden.

Weitere Vorteile sowie Weiterbildungen der Erfindung ergeben sich aus den abhängigen Ansprüchen sowie der nachfolgenden Beschreibung eines Ausführungsbeispiels der Erfindung anhand der beigefügten Figuren.

Es zeigen:
- Fig. 1: eine schematische Darstellung der Anordnung von Sende- und Empfangselektroden,
- Fig. 2: ein Blockschaltbild der erfindungsgemäßen Lösung,

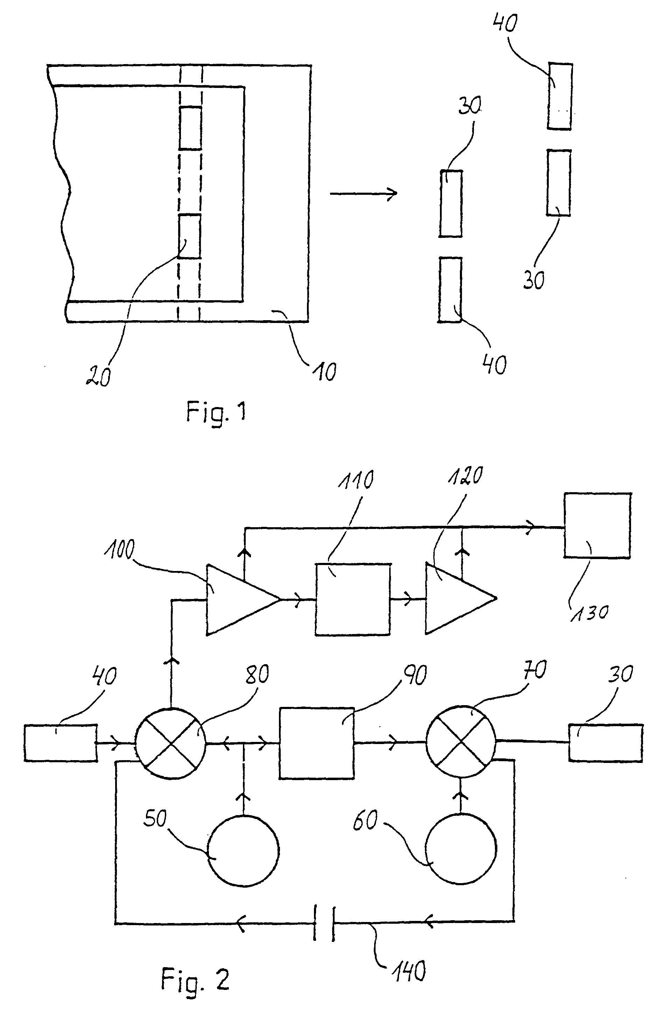

Fig. 1 zeigt beispielhaft zwei Elektrodenpaare, die jeweils eine Sendeelektrode 30 und eine Empfangselektrode 40 zur Detektierung eines elektrisch leitfähigen Elements in einem Dokument aufweisen. Das Dokument 10 kann beispielsweise eine Banknote sein, in der ein metallischer Sicherheitsfaden 20 in bekannter Art und Weise eingebettet ist. Die Elektroden 30, 40 weisen vorzugsweise eine Breite auf, die im wesentlichen mit der Breite des Sicherheitsfadens übereinstimmt. Beispielsweise können die Elektroden eine Breite von 1,5 mm aufweisen. Die Sende-und Empfangselektrode eines Elektrodenpaars können in einem Abstand von z. B. 5 mm angeordnet sein. Die Elektrodenpaare können sich dabei über die gesamte Breite des Dokuments erstrecken. Die Elektrodenpaare sind dabei derart anzuordnen, daß wenn sich der Sicherheitsfaden im Bereich der Elektroden befindet, die von der jeweiligen Sendeelektrode zu der jeweiligen Empfangselektrode kapazitiv übergekoppelten Meßsignale sich nicht gegenseitig stören. Die durch die Anordnung mehrerer Elektrodenpaare erhöhte Anzahl von Meßspuren ist insbesondere bei Schräglauf der zu prüfenden Dokumente vorteilhaft. Auch kann bei einer mehrspurigen Anordnung der Elektroden, die sich über die gesamte Breite des Dokuments erstreckt, die Länge des Sicherheitsfadens detektiert werden.

Selbstverständlich kann jedoch auch nur ein Elektrodenpaar, bestehend aus Sende- und Empfangselektrode, zur Detektierung des elektrisch leitfähigen Elements im Dokument ausreichend sein, insbesondere dann, wenn eine Erfassung der gesamten Länge des Sicherheitsfadens nicht gewünscht wird. Vorzugsweise sind dann die Sende- und die Empfangselektrode mittig zu dem an den Elektroden vorbeibewegten Dokument anzuordnen, damit auch bei Schräglauf des Dokuments der Sicherheitsfaden eine Überkopplung des Signals von der Sende- zur Empfangselektrode bewirken kann.

Gemäß der Erfindung wird ein moduliertes Signal an die Sendeelektrode angekoppelt und die kapazitive Übertragung des modulierten Signals zur Sendeelektrode gemessen. Eine Übertragung des modulierten Signals erfolgt dabei nur, wenn das elektrisch leitfähige Element sich im Bereich von Sende-und Empfangselektrode befindet.

Fig. 2 zeigt einen Oszillator 50 zur Erzeugung eines Trägerfrequenzsignals, z. B. von etwa 220 MHz und einen Modulations-Oszillator 60, dessen Frequenz z. B. auf 455 kHz festgelegt ist. Das Signal des Trägerfrequenz-Oszillators wird über einen Phasenschieber 90, der z. B. eine aufgrund von Streukapazitäten erhaltene, unerwünschte Phasenverschiebung eliminiert, einem Mischer 70 zugeführt und dort mit der Modulationsfrequenz multipliziert. Als Modulation wird hierbei eine 200 %-Amplitudenmodulation verwendet. Das vom Mischer 70 erhaltene modulierte Trägerfrequenzsignal wird der Sendeelektrode 30 zugeführt und mittels des hier nicht dargestellten, elektrisch leitfähigen Elements auf die Empfangselektrode 40 übertragen. Das an der Empfangselektrode 40 erhaltene Signal wird einem weiteren Mischer 80 zugeführt und dort mit der gleichen Trägerfrequenz abgemischt, wodurch die Modulationsfrequenz von 455 kHz zurückerhalten wird. Das Abmischen des modulierten Trägerfrequenzsignals kann z. B. durch phasenrichtige Multiplikation des modulierten Trägerfrequenzsignals mit derselben Trägerfrequenz erfolgen. Das Signal mit der Modulationsfrequenz kann über einen Vorverstärker 100 einem schmalbandigen Filter 110 zugeführt werden. Der Filter dient zur Unterdrückung von Rauschen und ermöglicht eine schmalbandige Verstärkung des Meßsignals im Verstärker 120. Das Ausgangssignal des Verstärkers 120, welches dem Logarithmus der Signalamplitude proportional ist und eine Bandbreite von z. B. 3 kHz aufweist, wird dann einer Einrichtung 130 zugeführt, die das verstärkte Meßsignal z. B. nach der Amplitude auswertet. Um eine bestmögliche Signalausbeute zu erhalten, kann man den Signalanteil wegkompensieren, der ohne elektrisch leitfähiges Element von der Sendeelektrode auf die Empfangselektrode überkoppelt. Dies kann beispielsweise durch eine Rückkopplung 140 des komplementären Ausgangs des Mischers 70 zur Empfangselektrode 40 erfolgen.

## Patentansprüche

1. Verfahren zur Detektion eines elektrisch leitfähigen Elements in einem Dokument, insbesondere eines in einer Banknote eingebetteten metallischen Sicherheitsfadens, wobei ein hochfrequentes Signal an wenigstens eine Sendeelektrode angekoppelt wird, das zu wenigstens einer Empfangselektrode kapazitiv übertragen wird, **dadurch gekennzeichnet, daß** an die Sendeelektrode ein moduliertes Trägerfrequenzsignal angekoppelt wird, das über das elektrisch leitfähige Element auf die Empfangselektrode übertragen wird, wobei die Trägerfrequenz im MHz-Bereich liegt und das empfangene Modulationssignal zur Erkennung des elektrisch leitfähigen Elements ausgewertet wird.

2. Verfahren nach Anspruch 1, **dadurch gekennzeichnet, daß** das modulierte Trägerfrequenzsignal im Empfänger mit derselben Trägerfrequenz auf die Modulationsfrequenz abgemischt wird.

3. Verfahren nach Anspruch 2, **dadurch gekennzeichnet, daß** das Signal mit der Modulationsfrequenz verstärkt und gefiltert wird und anschließend nach der Amplitude ausgewertet wird.

4. Verfahren nach Anspruch 1, **dadurch gekennzeichnet, daß** zur Modulation des Trägerfrequenzsignals eine Amplitudenmodulation, insbesondere eine 200 %-Amplitudenmodulation verwendet wird.

5. Verfahren nach Anspruch 4, **dadurch gekennzeichnet, daß** die Trägerfrequenz im MHz-Bereich liegt, insbesondere einen Wert von ca. 220 MHz aufweist, und die Modulationsfrequenz im kHz-Bereich liegt und insbesondere einen Wert von ca. 455 kHz aufweist.

6. Vorrichtung zur Durchführung des Verfahrens nach Anspruch 1 mit einem Oszillator (50) zur Erzeugung eines hochfrequenten Signals, das an wenigstens eine Sendeelektrode (30) angekoppelt wird und zu wenigstens einer Empfangselektrode (40) kapazitiv übertragen wird, wobei die Sende-und Empfangselektrode linienförmig zueinander angeordnet sind, **dadurch gekennzeichnet, daß** die Vorrichtung einen Oszillator (60) zur Erzeugung eines Modulationssignals aufweist, das mit dem Signal des Trägerfrequenz-Oszillators (50) einem Mischer (70) zugeführt wird, wobei die Trägerfrequenz im MHz-Bereich liegt und als Ausgangssignal des Mischers (70) ein moduliertes Trägerfrequenzsignal erhalten wird, das an die Sendeelektrode (30) angekoppelt wird.

7. Vorrichtung nach Anspruch 6, **dadurch gekennzeichnet, daß** das Signal des Trägerfrequenz-Oszillators (50) über einen Phasenschieber (90) dem Mischer (70) zugeführt wird.

8. Vorrichtung nach Anspruch 7, **dadurch gekennzeichnet, daß** ein Mischer (80) vorgesehen ist, der das von der Empfangselektrode (40) erhaltene modulierte Trägerfrequenzsignal mit derselben Trägerfrequenz auf die Modulationsfrequenz abmischt.

9. Vorrichtung nach Anspruch 8, **dadurch gekennzeichnet, daß** das Signal mit der Modulationsfrequenz einem Vorverstärker (100) zugeführt wird und das verstärkte Signal einem schmalbandigen Filter (110) zugeführt wird und das gefilterte Signal einem Verstärker (120) zugeführt wird, dessen Ausgangssignal von einer Einrichtung (130) nach der Amplitude ausgewertet wird.

10. Vorrichtung nach Anspruch 6, **dadurch gekennzeichnet, daß** mehrere Sende- und Empfangselektroden (30, 40) vorgesehen sind.

## Claims

1. A method for detecting an electroconductive element in a document, in particular a metallic security thread embedded in a bank note, a high-frequency signal being coupled to at least one transmitting electrode and transmitted capacitively to at least one receiving electrode, **characterized in that** a modulated carrier frequency signal is coupled to the transmitting electrode and transmitted via the electroconductive element to the receiving electrode, the carrier frequency being in the MHz range and the received modulated signal being evaluated for detecting the electroconductive element.

2. A method according to claim 1, **characterized in that** the modulated carrier frequency signal is mixed in the receiver with the same carrier frequency on the modulation frequency.

3. A method according to claim 2, **characterized in that** the signal with the modulation frequency is amplified and filtered and is then evaluated as to amplitude.

4. A method according to claim 1, **characterized in that** an amplitude modulation, in particular a 200% amplitude modulation, is used for modulating the carrier frequency signal.

5. A method according to claim 4, **characterized in that** the carrier frequency is in the MHz range, having in particular a value of about 220 MHz, and the modulation frequency is in the kHz range, having in particular a value of about 455 kHz.

6. An apparatus for carrying out the method according to claim 1 having an oscillator (50) for producing a high-frequency signal which is coupled to at least one transmitting electrode (30) and transmitted capacitively to at least one receiving electrode (40), the transmitting and receiving electrodes being disposed linearly to each other, **characterized in that** the apparatus has an oscillator (60) for producing a modulated signal which is supplied to a mixer (70) with the signal from the carrier frequency oscillator (50), the carrier frequency being in the MHz range and the output signal obtained from the mixer (70) being a modulated carrier frequency signal which is coupled to the transmitting electrode (30).

7. An apparatus according to claim 6, **characterized in that** the signal of the carrier frequency oscillator (50) is supplied to the mixer (70) via a phase shifter (90).

8. An apparatus according to claim 7, **characterized in that** a mixer (80) is provided which mixes the modulated carrier frequency signal obtained from the receiving electrode (40) with the same carrier frequency on the modulation frequency.

9. An apparatus according to claim 8, **characterized in that** the signal with the modulation frequency is supplied to a preamplifier (100) and the amplified signal is supplied to a narrow-band filter (110) and the filtered signal is supplied to an amplifier (120) whose output signal is evaluated as to amplitude by a device (130).

10. An apparatus according to claim 6, **characterized in that** a plurality of transmitting and receiving electrodes (30, 40) are provided.

## Revendications

1. Procédé de détection d'un élément électroconducteur dans un document, en particulier un fil métallique de sécurité intégré dans un billet de banque, dans lequel un signal haute fréquence est couplé à au moins une électrode d'émission, qui est transmis de façon capacitive à au moins une électrode de réception, **caractérisé en ce qu'**un signal composé d'une fréquence porteuse modulée est couplé à l'électrode d'émission pour transfert, via l'élément électroconducteur, à l'électrode de réception, la fréquence porteuse étant dans la gamme des MHz et on analyse le signal de modulation reçu afin de reconnaître l'élément électroconducteur.

2. Procédé selon la revendication 1, **caractérisé en ce que** le signal composé d'une fréquence porteuse modulée est mélangé, au niveau du récepteur, avec la même fréquence porteuse sur la fréquence de modulation.

3. Procédé selon la revendication 2, **caractérisé en ce que** le signal avec la fréquence de modulation est amplifié et filtré pour analyse ensuite en fonction de son amplitude.

4. Procédé selon la revendication 1, **caractérisé en ce que** pour la modulation du signal constitué d'une fréquence porteuse, on utilise une modulation d'amplitude, en particulier une modulation d'amplitude à 200 %.

5. Procédé selon la revendication 4, **caractérisé en ce que** la fréquence porteuse est située dans la gamme des MHz, et présente en particulier une valeur d'environ 220 MHz, et la fréquence de modulation est située dans la gamme des kHz et en particulier présente une valeur d'environ 455 kHz.

6. Procédé pour la réalisation du procédé selon la revendication 1, avec un oscillateur (50) pour la production d'un signal haute fréquence qui est couplé à au moins une électrode d'émission (30) pour transfert de façon capacitive à au moins une électrode de réception (40), les électrodes d'émission et de réception étant disposées de façon linéaire l'une par rapport à l'autre, **caractérisé en ce que** le dispositif présente un oscillateur (60) pour la production d'un signal de modulation, qui est amené avec le signal de l'oscillateur de la fréquence porteuse (50) à un mélangeur (70), la fréquence porteuse étant située dans la gamme des MHz et, en tant que signal de sortie du mélangeur (70), on obtient un signal composé d'une fréquence porteuse modulée qui est couplée à l'électrode d'émission (30).

7. Dispositif selon la revendication 6, **caractérisé en ce que** le signal de l'oscillateur de fréquence porteuse (50) est amené au mélangeur (70) via un circuit de décalage de phase (90).

8. Dispositif selon la revendication 7, **caractérisé en ce qu'**un mélangeur (80) est prévu qui effectue le mélange du signal composé de la fréquence porteuse modulée obtenue de l'électrode de réception (40), avec la même fréquence porteuse sur la fréquence de modulation.

9. Dispositif selon la revendication 8, **caractérisé en ce que** le signal est envoyé, avec la fréquence de modulation, à un préamplificateur (100), et le signal amplifié est envoyé à un filtre à bande étroite (110), le signal filtré est envoyé à un amplificateur (120) dont le signal de sortie est évalué en ce qui concerne son amplitude au moyen d'un dispositif (130).

10. Dispositif selon la revendication 6, **caractérisé en ce que** plusieurs électrodes d'émission et de réception (30, 40) sont prévues.
